(19) Europäisches Patentamt
European Patent Office
Office européen des brevets

(11) **EP 2 234 003 B1**

(12) **FASCICULE DE BREVET EUROPEEN**

(45) Date de publication et mention
de la délivrance du brevet:
**14.01.2015 Bulletin 2015/03**

(51) Int Cl.:
*G06F 3/0346* (2013.01)   *G06F 3/01* (2006.01)
*G06F 3/033* (2013.01)   *G01C 21/16* (2006.01)
*G01P 15/18* (2013.01)   *G01P 21/00* (2006.01)

(21) Numéro de dépôt: **10157242.8**

(22) Date de dépôt: **22.03.2010**

(54) **Procédé d'identification d'un axe de rotation unique d'un mouvement de rotation**

Verfahren zur Identifikation der einzigen Drehachse einer Drehbewegung

Method for identifying a single axis of rotation of a rotation movement

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **23.03.2009 FR 0951841**

(43) Date de publication de la demande:
**29.09.2010 Bulletin 2010/39**

(73) Titulaire: **Société Française du Radiotéléphone
75008 Paris (FR)**

(72) Inventeur: **Bruzonne, Raul
78280, Guyancourt (FR)**

(74) Mandataire: **Lotaut, Yacine Diaw
Cabinet Schmit-Chrétien SNC
8, place du Ponceau
F-95000 Cergy (FR)**

(56) Documents cités:
**EP-A1- 1 985 233**

**Description**

*Domaine de l'invention*

La présente invention a pour objet un procédé d'identification d'un axe de rotation unique destiné à reconstruire un mouvement de rotation imposé par un utilisateur à un système d'application mobile. Plus particulièrement, la présente invention concerne un procédé de reconstitution d'un geste imposé à un téléphone mobile par un utilisateur.

L'invention a également pour objet un téléphone mobile comportant des moyens pour mettre en oeuvre le procédé d'identification de l'axe de rotation relatif au mouvement de rotation imposé par l'utilisateur.

Un but de l'invention est de déclencher une application à partir du mouvement de rotation reconstitué.

*Etat de la technique*

Aujourd'hui, les accéléromètres sont des composants électroniques de plus en plus courants dans des objets du quotidien tels que notamment les manettes de console de jeux vidéo où les différents mouvements appliqués à la manette se traduisent en action au niveau du jeu.

Il est possible de trouver actuellement des téléphones mobiles également équipés d'accéléromètres. L'accéléromètre embarqué dans les téléphones mobiles permet en particulier de basculer automatiquement l'écran pour afficher un contenu dans le format le plus adapté. Aujourd'hui, des études pour inventer de nouveaux usages du téléphone mobile via l'accéléromètre se multiplient. Toutefois, ces études sont encore à l'état expérimental. En effet, par rapport aux manettes de console de jeux qui se trouvent dans un environnement stable, l'accéléromètre embarqué dans un téléphone mobile mesure un signal comportant, outre le mouvement imposé par l'utilisateur, des accélérations parasites. Ces accélérations parasites comportent principalement notamment l'accélération due à la gravitation terrestre et bien entendu les mouvements du corps de l'utilisateur et les vibrations de l'environnement où se situe l'utilisateur.

Aujourd'hui, même s'il existe des procédés pour corriger l'accélération parasite due à la gravitation terrestre, le rapport signal/sur bruit reste relativement faible. Il est difficile d'identifier le mouvement relatif à l'utilisateur imposé à un téléphone mobile par rapport à d'autres mouvements parasites. De ce fait, l'accéléromètre embarqué dans les téléphones mobiles n'est utilisé que pour des mesures de déplacements par rapport à l'environnement, de pentes et d'inclinaisons, de détection de chocs ou des mesures de positionnement. Les mouvements associés à ces mesures sont relativement simples à identifier. Du fait que le nombre de mouvements faciles à identifier est limité, les utilisations des applications du téléphone mobile via l'accéléromètre sont également restreintes.

Ainsi actuellement, il s'est fait sentir le besoin d'appliquer des mouvements complexes au téléphone mobile, tels que la rotation, afin d'utiliser les fonctions du téléphone sans avoir à manipuler des touches et à chercher dans des menus.

Toutefois, les mouvements de rotation effectués par le bras de l'utilisateur ne sont pas parfaits du point de vue géométrique. En effet, ils sont liés à la chaîne squelettique. De ce fait, la reconstruction de ces mouvements de rotation est compliquée. Car d'une part le nombre de degrés de liberté de la chaîne squelettique participant au mouvement est généralement important et d'autre part le nombre de muscles impliqués dans le mouvement de chaque articulation est beaucoup plus grand que ce qui est nécessaire mécaniquement.

*Exposé de l'invention*

L'invention a justement pour but de répondre à ce besoin en remédiant aux inconvénients des techniques exposées précédemment. Pour cela, l'invention propose un procédé d'identification d'un axe de rotation fixe dans l'espace et unique afin de reconstruire le mouvement de rotation imposé par un utilisateur à un dispositif d'application mobile.

Pour ce faire, l'invention met en oeuvre un algorithme d'estimation de l'axe de rotation le plus probable à partir des données fournies par l'accéléromètre embarqué. L'algorithme de l'invention permet d'améliorer les performances en termes d'estimation de l'axe de rotation, de coût calculatoire et de précision et robustesse des résultats. A cet effet, la présente invention vise un procédé d'estimation du mouvement d'un système mobile dans un milieu susceptible de générer des perturbations, le mouvement étant défini par un vecteur à trois variables et ledit système étant équipé d'au moins un capteur sensible à l'accélération ayant trois axes de sensibilité.

Dans l'invention, au lieu de supprimer l'accélération parasite due à la gravitation terrestre, l'algorithme de l'invention l'utilise pour estimer l'axe de rotation. En effet, les accélérations dues au mouvement imposé par l'utilisateur sont largement inférieures à l'accélération due à la gravitation terrestre. De ce fait, la différence entre l'accélération due à la gravitation terrestre et l'accélération due au mouvement imposé est quasi constante tout au cours du mouvement et sa direction reste sensiblement inchangée.

L'algorithme de l'invention effectue une projection de cette différence afin d'obtenir un nuage de points dans un plan. A partir de ce nuage de points, l'algorithme de l'invention calcule une estimation de la position de l'axe de rotation la plus probable. Puis une application associée à cet axe de rotation estimé est déclenchée.

L'application peut consister entre autres en :

- l'envoi d'un SMS,
- l'activation du mode « mains libres »,
- l'activation du renvoi d'appel,
- la réponse à un appel entrant,
- la réalisation d'un appel sortant,
- l'ouverture d'une application telle que notamment un SMS, un MMS, une messagerie vocale ou Internet, etc....
- la navigation dans les menus du téléphone,
- l'utilisation comme manette de jeu,
- la mise en vibreur.

Ce mode de déclenchement des applications d'un système mobile tel qu'un téléphone mobile est appelé à faire partie des fonctions standard dans les mobiles de prochaine génération.

La présente invention présente ainsi l'avantage de proposer un algorithme apte à identifier des mouvements complexes du bras d'un utilisateur avec un taux de reconnaissance suffisant. L'invention permet ainsi d'augmenter les possibilités d'utilisation des accéléromètres embarqués dans un système mobile.

La présente invention, peut par ailleurs être combinée avec des algorithmes existants destinés à estimer une position en translation du téléphone mobile par rapport à une position de départ.

L'invention a donc pour objet un procédé de détermination d'un axe de rotation unique d'un mouvement de rotation imposé par un utilisateur à un système d'application mobile dans lequel :

- on mesure des accélérations d'un accéléromètre à trois axes du système pendant une durée donnée,
- on exprime les accélérations mesurées selon des vecteurs d'accélération par rapport à un repère cartésien solidaire au système,
- on détermine à chaque instant de mesure, une variation temporelle d'un vecteur d'accélération due au champ de gravitation local du système par rapport aux vecteurs d'accélération exprimés,
- on détermine les orientations des vecteurs d'accélération déterminés par rapport au repère,
- on projette les vecteurs d'accélération déterminés à une longueur de projection prédéfinie dans le prolongement de leurs orientations de sorte à obtenir un nuage de points,
- on détermine une direction d'un axe de rotation unique correspondant à l'axe de rotation du système en fonction du nuage de points, la direction de l'axe de rotation unique étant définie par les coordonnées dudit axe dans le repère cartésien.

Avantageusement, l'invention est également **caractérisée en ce que** la détermination d'une direction de l'axe de rotation unique comporte les étapes suivantes :

- on détermine un cercle médian en fonction du nuage de points, le cercle médian formant un cône avec les orientations des accélérations mesurées, ledit cercle médian étant le cercle ayant pour rayon la médiane de l'ensemble des rayons les plus probables pour chaque point du nuage de points,
- on détermine une direction de l'axe de rotation unique correspondant à l'axe de révolution du cône, la direction de l'axe de rotation est définie par les coordonnées dudit axe dans un repère cartésien solidaire du système.

Avantageusement, l'invention est également **caractérisée en ce que** la détermination du cercle médian comporte l'étape suivante :

- on détermine un rayon du cercle en fonction de l'application de l'algorithme des moindres carrés aux nuages de points, le centre du cercle passant par l'axe de révolution,
- on détermine l'axe de révolution à partir du rayon du cercle médian et du centre du cercle.

Avantageusement, l'invention est également **caractérisée en ce que**

- on détermine un plan comportant un maximum de points du nuage de points,
- on détermine une droite perpendiculaire au plan correspondant à l'axe de rotation unique.

Avantageusement, l'invention est également **caractérisée en ce que**

- on applique un filtre passe bas aux accélérations mesurées.

Avantageusement, l'invention est également **caractérisée en ce que** le filtre passe bas est une moyenne glissante.

Avantageusement, l'invention est également **caractérisée en ce que**

- on affecte un attribut de confiance à l'axe de rotation unique déterminé en fonction de son évolution au cours du temps et/ou de la durée de la mesure.

Avantageusement, l'invention est également **caractérisée en ce que**

- on transmet à l'utilisateur une requête de confirmation du mouvement de rotation imposé, lorsque l'attribut de confiance est inférieur à un seuil de confiance prédéfini.

Avantageusement, l'invention est également **caractérisée en ce que**

- on associe dans une mémoire du système une direction donnée d'un axe de rotation à une application du système,
- on déclenche l'application associée à cette direction de l'axe rotation déterminé, lorsque l'attribut de confiance est supérieur au seuil de confiance prédéfini.

L'invention a également pour objet un téléphone mobile comportant des moyens aptes à mettre en oeuvre le procédé de l'invention de détermination d'un axe de rotation unique d'un mouvement de rotation imposée par un utilisateur audit téléphone mobile..

*Brève description des dessins*

L'invention sera mieux comprise à la lecture de la description qui suit et à l'examen des figures qui l'accompagnent. Celles-ci sont présentées à titre indicatif et nullement limitatif de l'invention.

La figure 1 montre une représentation schématique d'un système d'application mobile muni des moyens perfectionnés de l'invention.
La figure 2 montre une représentation schématique en 3D du mouvement imposé au système mobile de la figure 1.
La figure 3 montre une représentation schématique du résultat de projection des vecteurs accélérations à un module donné formant un nuage de points, selon l'invention.
La figure 4 montre une représentation schématique d'un plan comportant le nuage de points.
La figure 5 montre une illustration d'étapes correspondant à une identification d'un axe de rotation du mouvement imposé par un utilisateur au système mobile.
La figure 6 montre un téléphone mobile muni des moyens perfectionnés de l'invention.

*Description détaillée de modes de réalisation de l'invention*

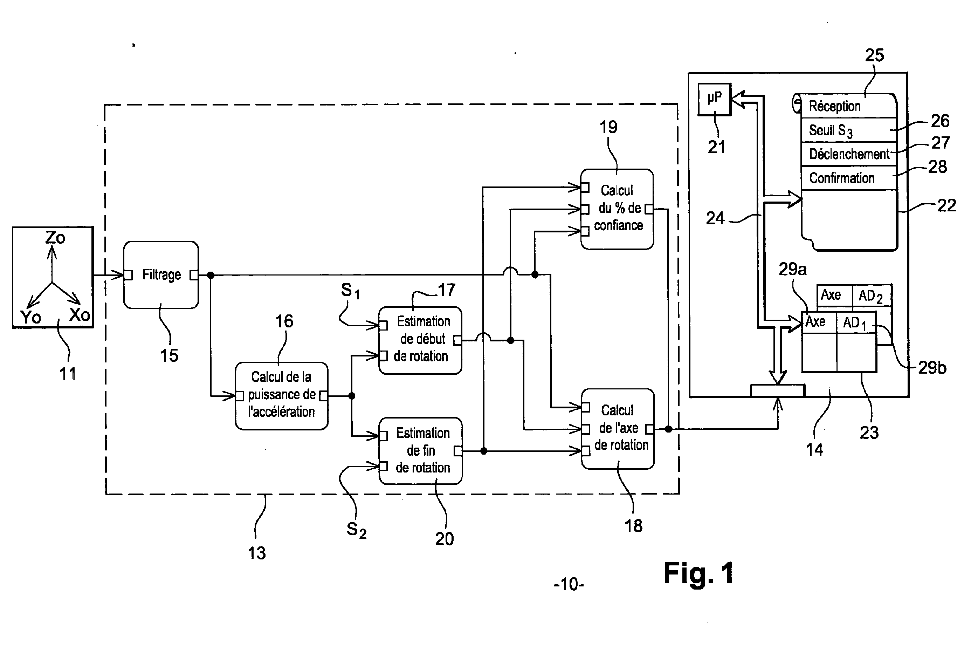

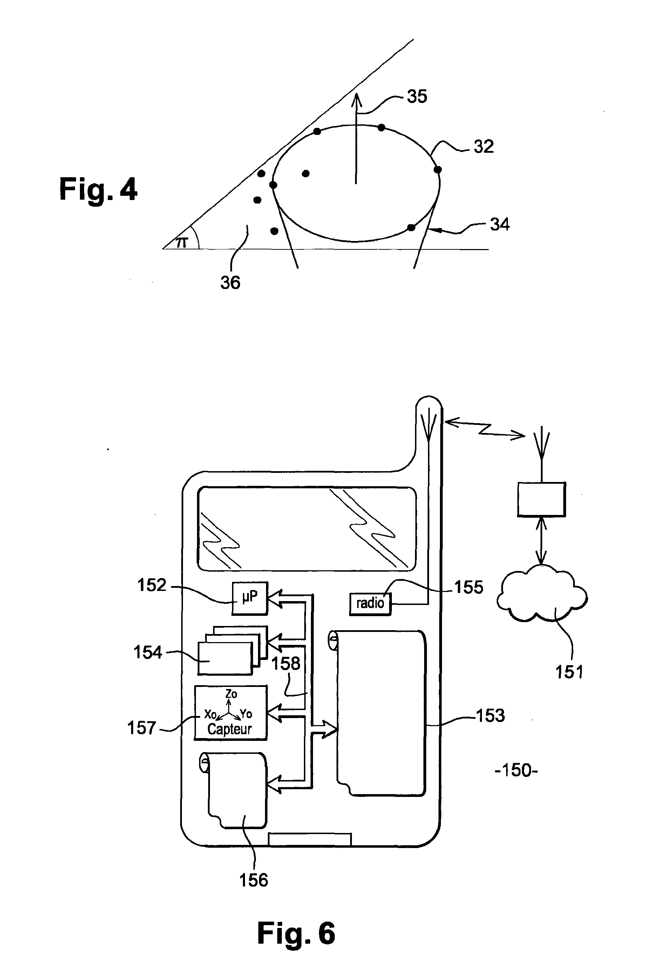

La figure 1 montre un système 10 d'application mobile. Ce système 10 permet de traduire en instructions un mouvement imposé audit système. Le système 10 peut être un téléphone mobile comme illustré à la figure 6, une manette de jeu, un terminal Internet mobile plus connu en anglais sous le nom de Mobile Internet Device (MID), une tablette PC, un livre électronique ou tout autre dispositif mobile embarquant un accéléromètre.

Le système 10 comporte un capteur 11 de mouvement qui est un accéléromètre comportant trois axes de sensibilité. Les accélérations fournies par le capteur 11 sont de faible niveau. Elles sont largement inférieures à g, g étant une unité d'accélération correspondant approximativement à l'accélération de la pesanteur à la surface de la terre. La précision du capteur 11 requise est importante. Elle peut varier de 0,01 % à 2 % de l'échelle de mesure du capteur. Le capteur 11 de mouvement peut être une jauge, un capteur capacitif, un capteur à induction, un capteur optique ou un potentiomètre. La liste n'est pas exhaustive. Le capteur 11 peut être couplé à un gyroscope pour obtenir des mesures complémentaires permettant de gagner en précision.

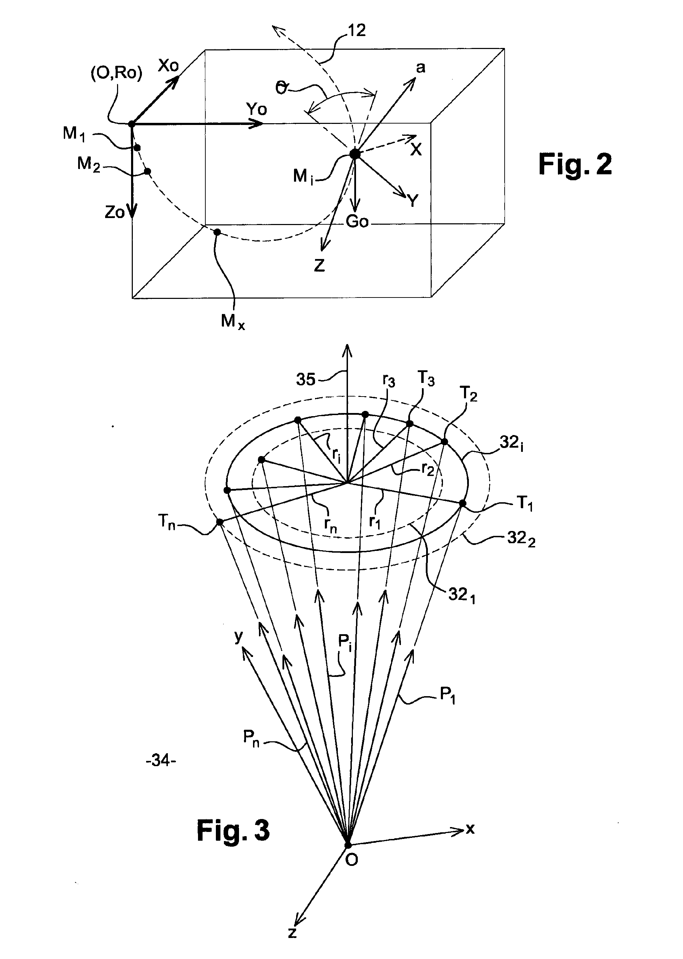

Le capteur 11 de mouvement enregistre une accélération $a_i$ d'un mouvement 12 du système 10 à des instants $t_i$ prédéfinis. Le mouvement 12 correspond à un mouvement de rotation, cette rotation étant représentée en pointillé à la figure 2. L'accélération $a_i$ est une grandeur vectorielle qui indique la modification affectant la vitesse du mouvement 12 en fonction du temps.

Le système 10 est ici considéré comme ponctuel et est repéré par une position $M_i$ à un instant $t_i$ comme indiqué sur la figure 2. Son orientation est repérée par le vecteur θ, qui correspond à l'orientation d'un repère R (x, y, z) dans un repère fixe Ro (Xo, Yo, Zo). Le repère fixe Ro correspond à un repère initial dans une phase de repos du système 10 d'applications au point 0. Selon l'invention le repère fixe Ro est un repère cartésien solidaire au système 10. Le repère fixe Ro est caractérisé par un triplet de vecteurs unitaires (i, j et k), qui représentent respectivement les directions des axes Ox, Oy et Oz.

Le capteur 11 enregistre également à tout instant $t_i$ l'accélération de la pesanteur notée Go. Ici, à titre d'exemple non limitatif, l'axe Zo du repère fixe Ro est aligné avec la verticale et donc avec Go. Ainsi, lorsque le système 10 est dans une position initiale au repos, on peut définir un vecteur Go de dimension trois, correspondant à l'accélération de la pesanteur.

Le mouvement 12 imposé au système 10 est défini par le vecteur $a_i$ à trois variables correspondant au mouvement propre dudit système et aux mouvements parasites. Les trois variables correspondent à la position du système mobile 10 dans le repère R, correspondant ainsi aux coordonnées X, Y, Z dans le repère R.

Lorsque le système 10 entre en mouvement, le vecteur $a_i$ est rajouté au vecteur initial Go. Ainsi, le champ total mesuré par le dispositif de mesure correspond à la somme des vecteurs Go + $a_i$.

Le système 10 comporte un calculateur 13 représenté en pointillé à la figure 1. Le calculateur 13 est connecté au capteur 11. Le système 10 comporte également un dispositif de traitement 14 connecté au calculateur 13. Les calculateurs 13 et 14 peuvent éventuellement être mis en oeuvre comme des processus exécutés sur la même entité physique.

Dans la description, on prête des actions à des appareils ou à des programmes, cela signifie que ces actions sont exécutées par un microprocesseur de cet appareil ou de l'appareil comportant le programme, ledit microprocesseur étant alors commandé par des codes instructions enregistrés dans une mémoire de l'appareil. Ces codes instructions permettent de mettre en oeuvre les moyens de l'appareil et donc de réaliser l'action entreprise.

Le calculateur 13 comporte notamment un microprocesseur et une mémoire de programme (non représentés). La mémoire de programme est divisée en plusieurs zones, chaque zone correspondant à une fonction ou à un mode de fonctionnement du programme du calculateur 13. Les zones de la mémoire de programme du calculateur 13 sont illustrées à la figure 1 par des rectangles 15 à 20.

Une zone 15 comporte des codes instructions pour recevoir du capteur 11 des coordonnées du vecteur accélération $a_i$. Du fait que les accélérations imposées par l'utilisateur au capteur 11 sont de faible niveau par rapport au vecteur Go, ces composantes peuvent être négligées lors des rotations typiques effectuées comme gestes avec le système 10. Par conséquent, il est considéré avec l'algorithme de l'invention que, au cours du geste, l'accélération à traiter $\Delta G_i$, correspondant à Go - $a_i$, conserve quasiment la direction verticale pointée vers le centre de la Terre et la valeur mesurées par rapport à un repère solidaire à la terre du vecteur accélération Go. Dans ce sens, la configuration adressée par cette invention diffère significativement des conditions imposées, par exemple, à une manette de jeu dont l'accélération imposée peut être très significative par rapport au vecteur Go.

Les composantes du vecteur d'accélération $\Delta G_i$ sont perturbées par plusieurs types de bruit tel que notamment ceux susceptibles d'être générés par le milieu où se situe le système 10 (voiture, tain ...) et les mouvements involontaires de l'utilisateur. La zone 15 comporte de ce fait des codes instructions pour filtrer les composantes reçues du capteur 11. Un filtre passe-bas est appliqué aux données reçues afin de supprimer les composantes à haute fréquence. Dans un mode de réalisation simple à mettre en oeuvre, bien qu'avantageux et efficace, le filtre passe-bas appliqué aux données reçues est une moyenne glissante. Bien entendu, d'autres types de filtres passe-bas peuvent être utilisés.

La moyenne glissante, ou moyenne mobile, est un type de moyenne statistique permettant de supprimer les fluctuations transitoires des données reçues, de façon à en souligner les tendances à plus long terme. Cette moyenne est dite *mobile* parce qu'elle est recalculée de façon continue, en utilisant à chaque calcul un sous-ensemble d'éléments dans lequel un nouvel élément remplace le plus ancien ou s'ajoute au sous-ensemble.

En sortie de la zone 15 de filtrage, le vecteur $G_{im}$ est un macro-vecteur dont chacune de ses composantes est remplacée par une macro-composante ($Gx_{im}$, $Gy_{im}$, $Gz_{im}$). Une macro-composante est une moyenne d'un sous-ensemble de N composantes consécutives. Dans un exemple, N égale cinq.

Une zone 16 comporte des codes instructions pour calculer une puissance d'accélération à partir des données reçues de la zone 15. La puissance d'accélération correspond à une différence entre les modules de deux macro-vecteurs $G_{im}$ consécutifs.

Une zone 17 comporte des codes instructions pour comparer la puissance d'accélération fournie par la zone 16 à un premier seuil S1 de cinétique prédéfini. Dès que la puissance d'accélération est supérieure au seuil S1, alors des codes instructions d'une zone 18 et d'une zone 19 sont exécutés. Les codes instructions de la zone 18 traitent les données fournies par la zone de filtrage 15 afin de déterminer l'axe de rotation du mouvement imposé au système 10. Les codes instructions de la zone 19 traitent les données fournies par la zone de filtrage 15 afin de déterminer un attribut de confiance à attribuer à l'axe de rotation déterminé. Cet attribut de confiance peut être exprimé en pourcentage. Les figures 3 et 4 montrent des exemples de déterminations de l'axe de rotation par les codes instructions de la zone 18.

Une zone 20 comporte des codes instructions pour comparer la puissance d'accélération fournie par la zone 16 à un deuxième seuil S2 de cinétique prédéfini. Dès que la puissance d'accélération est inférieure au seuil S2, alors l'exécution des codes instructions de la zone 18 et de la zone 19 est interrompue.

Ainsi, le début du geste et la fin du geste de l'utilisateur sont détectés par rapport à l'augmentation ou la diminution de la dynamique.

Le calculateur 13 fournit en entrée au dispositif 14 de traitement les données de sortie des zones 18 et 19. Le dispositif 14 de traitement comporte notamment un microprocesseur 21, une mémoire 22 de programme et une mémoire 23 de données connectés par un bus 24.

La mémoire 22 de programme est divisée en plusieurs zones, chaque zone correspondant à une fonction ou à un mode de fonctionnement du programme du dispositif 14 de traitement. Une zone 25 comporte des codes instructions pour recevoir du calculateur 13 des données correspondant à un axe de rotation et au pourcentage attribué à cet axe. Une zone 26 comporte des codes instructions pour comparer le pourcentage attribué à un seuil S3 de confiance.

Lorsque le pourcentage attribué est supérieur ou éventuellement égal au seuil S3 alors des codes instructions d'une zone 27 sont exécutés. Les codes instructions de la zone 27 déclenchent une application via la mémoire 23 de données. Sinon, des codes instructions d'une zone 28 sont exécutés. Les codes instructions de la zone 28 transmettent une requête de confirmation du mouvement imposé à l'utilisateur. Cette requête peut être un SMS ou un message vocal.

La mémoire 23 de données est, par exemple, structurée en une table. Par exemple, chaque ligne de la table correspond à une position de l'axe de rotation, chaque colonne de la table correspond à un renseignement sur cet axe de rotation. Ainsi, la mémoire 23 de données comporte une ligne 29a correspondant à une position donnée d'un axe de rotation et une colonne 29b correspondant à une adresse $AD_1$ d'une application de services du système 10 à déclencher. L'adresse AD est une adresse mémoire et peut être un simple identifiant alphanumérique

Les figures 3 et 4 montrent deux modes de détermination de l'axe de rotation unique du mouvement 12 imposé par l'utilisateur au système 10, via les codes instructions de la zone 18.

La zone 18 du calculateur 13 projette les vecteurs d'accélérations $G_{im}$ délivrés par la zone 15 de filtrage. Les macro-vecteurs d'accélérations $G_{im}$ sont projetés dans le sens de leurs orientations. Les vecteurs d'accélérations $G_{im}$ projetés forment un nuage de points $T_i$.

Puisque le module du vecteur accélération $G_{im}$ filtré est quasiment constant alors le nuage de points représentés dans le repère local se trouvera dans des circonférences $32_i$.

Soit P le vecteur de module unitaire qui représente l'axe de rotation du système au cours du geste. Sa position peut être représentée par ses trois composantes : $P = P_x.i + P_y.j + P_z.k$.

Chaque type de geste de l'utilisateur est associé à une certaine position de P. Les coordonnées $(P_x, P_y, P_z)$ sont par conséquent la signature du mouvement. Les codes instructions de la zone 18 sont aptes à identifier ces coordonnées. Et les codes instructions de la zone 19 sont aptes à définir un degré de confiance mesurable à attribuer aux coordonnées identifiés.

Puisque le vecteur accélération $G_{im}$ est quasiment toujours vertical et le geste considéré est une rotation autour d'un axe unique P fixe, l'angle formé par $G_{im}$ et l'axe de rotation P est considéré comme constant au cours de la rotation. Par conséquent, la ligne droite parallèle au vecteur $G_{im}$ passant par le centre du repère fixe décrira une surface conique 34 de révolution. Le problème résolu par l'invention est de déterminer la direction de l'axe 35 du cône correspondant à l'axe P de rotation unique.

Un premier mode de détermination de l'axe 35 du cône 34 consiste à estimer la position dans l'espace d'un cercle $32_i$ médian le plus probable par rapport au nuage de points $T_i$.

Il est important de souligner que, inévitablement, il y a toujours des dérives par rapport à la rotation idéale. Ceci dépend, en grande mesure, des déplacements secondaires de la main au cours de la rotation et des mouvements de l'utilisateur par rapport au milieu dans lequel il se situe et des perturbations de ce milieu. Afin de tenir compte de ces écarts par rapport au mouvement idéal, l'algorithme applique des méthodes de minimisation d'erreurs permettant d'établir la meilleure estimation de P en fonction des mesures réalisées.

Pour déterminer le cercle $32_i$ le plus probable, le calculateur 13 calcule pour chaque point $T_i$ le rayon $r_i$ le plus probable. Dans un mode de réalisation préféré, le rayon $r_i$ attribué à chaque point $T_i$ du nuage de points projetés est déterminé selon l'algorithme des moindres carrés. D'autres modes de calculs existants peuvent être utilisés pour déterminer le rayon r du cercle 32 médian le plus probable.

L'axe 35 passant par le centre du cercle 32 médian le plus probable correspond à l'axe P de rotation unique du mouvement 12.

La figure 4 montre un autre mode de détermination préféré de l'axe 35 du cône 34. Puisque le module du vecteur accélération $G_{im}$ est quasiment constant alors le nuage de points forme des circonférences $32_i$ situées dans un plan 36 perpendiculaire à l'axe P de rotation. Pour déterminer l'axe P de rotation unique, il faudra d'abord identifier ce plan 36 et en déduire le vecteur normal.

L'équation du plan 36 est définie comme suit :

x = a + by + cz. Les codes instructions de la zone 18 du calculateur 13 calculent les coefficients a, b et c du plan 36. Dans un mode de réalisation préféré, ces coefficients sont déterminés selon l'algorithme des moindres carrés appliqué aux fonctions linéaires à deux variables : f(y, z) = a + by + cz.

Les mesures du vecteur accélération sont appelées :

$G_{im} = Gx_{im}.i + Gy_{im}.j + Gz_{im}.k$ où i allant de 1 à n et n représentant le nombre total de mesures réalisées au cours de la rotation.

Les équations ci-après montrent un exemple de calcul des coefficients du plan 36.
L'erreur de l'ensemble des mesures de i allant de 1 à n élevé au carré est :

$$E = \sum [Gx_{im}.i - (a + b.\,Gy_{im}.j + c.\,Gz_{im}.k)]^2$$

Les conditions nécessaires pour minimiser l'erreur sont :

$$\partial E/\partial a = 0, \ \partial E/\partial b = 0 \text{ et } \partial E/\partial c = 0,$$

ce qui se traduit par les relations matricielles suivantes :

$$m_{11}a + m_{12}b + m_{13}c = q_1$$

$$m_{21}a + m_{22}b + m_{23}c = q_2$$

$$m_{31}a + m_{32}b + m_{33}c = q_3$$

où les coefficients $m_{ij}$ sont donnés par les expressions suivantes :

| | | |
|---|---|---|
| $m_{11} = n$ | $m_{12} = \sum Gy_{im}$ | $m_{13} = \sum Gz_{im}$ |
| $m_{21} = m_{12}$ | $m_{22} = \sum Gy^2_{im}$ | $m_{23} = \sum Gy_{im}\,Gz_{im}$ |
| $m_{31} = m_{13}$ | $m_{32} = m_{23}$ | $m_{33} = \sum Gz^2_{im}$ |
| $q_1 = \sum Gx_{im}$ | $q_2 = \sum Gx_{im}\,Gy_{im}$ | $q_3 = \sum Gx_{im}\,Gz_{im}$ |

Le système d'équations linéaires précédent peut ainsi se représenter comme un rapport entre matrices :

$$\mathbf{M} = \begin{bmatrix} m_{11} & m_{12} & m_{13} \\ m_{21} & m_{22} & m_{23} \\ m_{31} & m_{32} & m_{33} \end{bmatrix} \qquad \mathbf{X} = \begin{bmatrix} a \\ b \\ c \end{bmatrix} \qquad \mathbf{Q} = \begin{bmatrix} q_1 \\ q_2 \\ q_3 \end{bmatrix}$$

$$\mathbf{M} = \mathbf{XQ}$$

Sous réserve que $|\mathbf{M}| \neq 0$, ce système permet de récupérer les coefficients a, b et c.
Le plan déterminé par le calculateur 13 correspond au plan le plus probable comportant le maximum de points possible du nuage de points.

La direction de l'axe de rotation est donnée par normalisation en utilisant les expressions suivantes :

$$p_x = \frac{1}{\sqrt{1+b^2+c^2}} \qquad p_y = \frac{-b}{\sqrt{1+b^2+c^2}} \qquad pz = \frac{-c}{\sqrt{1+b^2+c^2}}$$

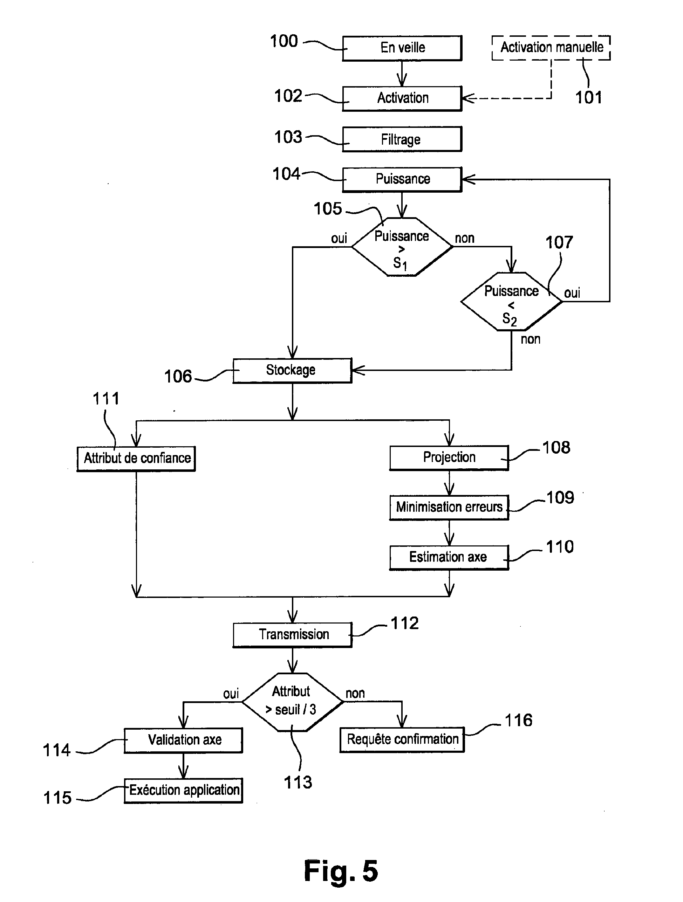

La figure 5 montre une illustration d'étapes correspondant à une identification, par le système 10, d'un axe de rotation du mouvement 12 imposé par un utilisateur. La figure 5 montre une première étape préliminaire 100 dans laquelle le système 10 est en mode veille. Lorsque le système 10 est dans cet état de veille, le calculateur 13 est activé en permanence. Le système 10 ne sortira de cet état de veille que lorsque la puissance de l'accélération fournie par le calculateur 13 sera supérieure au premier seuil S1.

Dans une variante, le calculateur 13 est activé manuellement lors d'une étape 101. Dans ce cas, les mesures du capteur 11 ne sont traitées que si l'utilisateur démarre le fonctionnement du calculateur 13. Ce démarrage peut être effectué en cliquant sur un bouton ou en appuyant sur une touche du système 10.

Même si l'implémentation de l'étape 100 est préférée à celle de l'étape 101, du fait qu'elle adhère à une notion d'interface utilisateur naturelle, la consommation d'énergie liée à l'implémentation de l'étape 100 peut obliger à adopter l'implémentation de l'étape 101.

A une étape 102, le système 10 est activé. Le calculateur 13 applique, à une étape 103, un filtre passe bas aux mesures d'accélérations fournies par le capteur 13 de mouvement. Ce filtrage permet de supprimer, des composantes du vecteur accélération, des perturbations dues par plusieurs types de bruit. Ce filtrage permet de filtrer les composantes à haute fréquence.

A une étape 104, le calculateur 13 calcule une puissance d'accélération pour chaque vecteur d'accélération $G_{im}$ filtré. La puissance d'accélération à un instant $t_i$ correspond à la différence entre un vecteur d'accélération à l'instant $t_{i-1}$ et un vecteur d'accélération à l'instant $t_i$.

A une étape 105, dès qu'une puissance d'accélération est supérieure au seuil S1 alors, le vecteur d'accélération $G_{im}$ correspondant est enregistré dans une mémoire de données du calculateur à une étape 106. Si la puissance d'accélération est comprise entre le seuil S1 et le seuil S2, à une étape 107, alors le vecteur d'accélération $G_{im}$ correspondant est enregistré dans la mémoire de données du calculateur à l'étape 106. Le calculateur 13 affecte un attribut de début de rotation au premier vecteur d'accélération $G_{im}$ d'une série de données enregistrées dans la mémoire de données du calculateur 13. Un attribut est un paramètre interne du calculateur 13. Il peut être un nombre binaire ou alphanumérique. Le calculateur 13 affecte un attribut de fin de rotation au dernier vecteur d'accélération $G_{im}$ d'une série de données enregistrées dans la mémoire de données du calculateur 13.

Le calculateur 13, selon le mode de réalisation préféré de l'invention, surveille ainsi en permanence les signaux en provenance de l'accéléromètre 11 pour déclencher l'évaluation de la rotation quand un niveau cinétique suffisamment élevé est identifié.

Les vecteurs d'accélération $G_{im}$ filtrés et enregistrés dans la mémoire de données à l'étape 106 représentent les données permettant de reconstituer le mouvement imposé. A une étape 108, le calculateur 13 projette les vecteurs d'accélération $G_{im}$ enregistrés à une longueur de module prédéfinie afin d'obtenir un nuage de points $T_i$.

A une étape 109, le calculateur 13 détermine soit le rayon r le plus probable du cercle formé par le nuage de points où les cordonnées du plan 36 comportant le maximum de points du nuage de points. Cette détermination est par exemple basée sur l'algorithme des moindres carrés. L'étape 109 permet de fournir en sortie à une étape 110, un axe de rotation estimé.

Puisque l'utilisateur peut imposer au système 10 un mouvement qui n'est pas une rotation autour d'un axe fixe, l'estimation de l'algorithme doit être validée. A une étape 111, le calculateur 13 détermine un attribut de confiance à affecter à l'axe de rotation estimé. Si le mouvement de rotation imposé est une rotation faible, l'axe de rotation devrait rester fixe dans l'espace pour toute la durée de la rotation. Pour déterminer l'attribut de confiance, le calculateur détermine jusqu'à quel point l'axe de rotation du système 10 ne change pas au cours du temps.

Dans un exemple préféré, le critère adopté consiste à calculer une moyenne de l'écart des extrémités des vecteurs d'accélération par rapport aux projections sur le plan estimé ou le cercle estimé. Le résultat de cette opération correspond à un niveau d'erreur à attribuer à l'axe de rotation estimé. Ce niveau d'erreur varie de 0 à 1. Plus ce niveau d'erreur est proche de zéro, plus la confiance à accorder à l'axe de rotation estimée est importante.

A une étape 112, le calculateur 13 transmet au dispositif 14 de traitement l'axe de rotation estimé et le niveau de confiance attribué. A une étape 113, le dispositif 14 de traitement compare le niveau de confiance attribué à un seuil S3 de confiance prédéfini. Si le niveau de confiance est supérieur au seuil S3, alors l'estimation de l'axe s'avère suffisant. Cet axe de rotation estimé est validé à une étape 114 comme l'axe P de rotation unique du mouvement 12 de rotation. A une étape 115, le dispositif 14 de traitement exécute l'application associée dans la mémoire de données à l'axe de rotation déterminé.

Si, par contre, le niveau de confiance attribué reste inférieur au seuil S3, alors l'estimation de l'axe de rotation est invalidée et l'utilisateur est prié de répéter le geste, à une étape 116. Dans ce cas, une requête de confirmation du mouvement 12 est transmise par le dispositif 14 de traitement à l'interface de l'utilisateur.

Le seuil S3 de confiance peut être par exemple égal à 90%. En général le niveau de confiance attribué est inférieur au seuil S3, lorsque la durée du mouvement 12 est faible, par exemple inférieure à 1 seconde. Dans ce cas, l'accéléromètre n'a pas récupéré assez de données pour permettre au dispositif de traitement de prendre une décision. De même, le niveau de confiance attribué est inférieur au seuil S3, lorsque le milieu environnant est particulièrement vibrant.

En général pour une bonne estimation de l'axe de rotation P, la durée du mouvement 12 doit être sensiblement supérieure à 3 secondes.

La figure 6 montre un téléphone mobile 150 d'un utilisateur, client d'un opérateur, en liaison avec un réseau 151 d'un opérateur de téléphonie mobile. Le téléphone mobile 150 est muni du système 10 de la figure 1.

Le terminal 150 comporte, outre une carte SIM (Subscriber Identity Module) contenant l'IMSI (International Mobile Subscriber Identity) et le MSISDN (Mobile Subscriber Integrated Services Digital Number), un microprocesseur 152, une première mémoire 153 de programme, une mémoire 154 de données, des circuits 155 d'interface radio avec le réseau 150 de l'opérateur de téléphonie, une deuxième mémoire 156 de programme et un capteur de mouvement 157 à trois axes. Les éléments 152 à 157 sont connectés par un bus 158.

La mémoire 153 de programme correspond à la mémoire de programme du dispositif de traitement et la mémoire 156 correspond à la mémoire de programme du calculateur 13.

La représentation des mémoires de données et des mémoires de programmes dans le téléphone mobile n'est qu'une illustration d'implantation de composants et d'enregistrements de données. Dans la pratique, ces mémoires sont unifiées ou distribuées selon des contraintes de taille (capacité) et/ou de rapidité des traitements souhaités.

En outre, la mémoire programme du dispositif de traitement peut être répartie sur d'autres serveurs de l'opérateur de téléphonie mobile, éventuellement selon le type d'applications à déclencher.

Dans un mode de réalisation préféré, les mémoires de données et les mémoires de programmes sont enregistrées dans la carte SIM ou dans la mémoire interne du téléphone mobile.

## Revendications

1. Procédé de détermination d'un axe de rotation (P) unique d'un mouvement (12) de rotation imposé par un utilisateur à un système d'application (10) mobile dans lequel :

   - on mesure des accélérations $a_i$ d'un accéléromètre (11) à trois axes du système pendant une durée donnée,
   - on exprime les accélérations mesurées selon des vecteurs d'accélération par rapport à un repère cartésien (Ro) solidaire au système,
   - on détermine à chaque instant de mesure, une variation temporelle d'un vecteur d'accélération ($\Delta G_i$) due au champ de gravitation local (Go) du système par rapport aux vecteurs d'accélération exprimés,
   - on détermine les orientations ($\theta$) des vecteurs d'accélération ($\Delta G_i$) déterminés par rapport au repère (Ro),
   - on projette (108) les vecteurs d'accélération ($\Delta G_i$) déterminés à une longueur de projection prédéfinie dans le prolongement de leurs orientations de sorte à obtenir un nuage de points ($T_i$),
   - on détermine une direction d'un axe de rotation unique correspondant à l'axe de rotation du système en fonction du nuage de points, la direction de l'axe de rotation unique étant définie par les coordonnées dudit axe dans le repère cartésien (Ro).

2. Procédé selon la revendication 1, **caractérisé en ce que** la détermination d'une direction de l'axe de rotation unique comporte les étapes suivantes :

   - on détermine un cercle médian ($32_i$) en fonction du nuage de points, le cercle médian formant un cône (34) avec les orientations des accélérations mesurées, ledit cercle médian étant le cercle ayant pour rayon la médiane de l'ensemble des rayons les plus probables pour chaque point du nuage de points,
   - on détermine une direction de l'axe de rotation unique correspondant à l'axe de révolution du cône, la direction de l'axe de rotation est définie par les coordonnées dudit axe dans un repère cartésien (Ro) solidaire du système.

3. Procédé selon la revendication 2, **caractérisé en ce que** la détermination du cercle médian comporte l'étape suivante :

   - on détermine un rayon ($r_i$) du cercle en fonction de l'application de l'algorithme des moindres carrés aux nuages de points, le centre du cercle passant par l'axe de révolution,
- on détermine l'axe de révolution à partir du rayon du cercle médian et du centre du cercle.

**4.** Procédé selon la revendication 1, **caractérisé en ce que** :

- on détermine un plan (36) comportant un maximum de points du nuage de points,
- on détermine une droite perpendiculaire au plan correspondant à l'axe de rotation unique.

**5.** Procédé selon l'une des revendications 1 à 4, **caractérisé en ce que** :

- on applique (15, 103) un filtre passe bas aux accélérations mesurées.

**6.** Procédé selon la revendication 5, **caractérisé en ce que** le filtre passe bas est une moyenne glissante.

**7.** Procédé selon l'une des revendications 1 à 6, **caractérisé en ce que** :

- on affecte (19, 111) un attribut de confiance à l'axe de rotation unique déterminé en fonction de son évolution au cours du temps et/ou de la durée de la mesure.

**8.** Procédé selon la revendication 7, **caractérisé en ce que** :

- on transmet (28, 116) à l'utilisateur une requête de confirmation du mouvement de rotation imposé, lorsque l'attribut de confiance est inférieur à un seuil (S3) de confiance prédéfini.

**9.** Procédé selon l'une des revendications 7 à 8, **caractérisé en ce que** :

- on associe dans une mémoire (23) du système une direction donnée d'un axe de rotation (29a) à une application (29b) du système,
- on déclenche l'application associée à cette direction de l'axe rotation déterminé, lorsque l'attribut de confiance est supérieur au seuil de confiance prédéfini.

**10.** Téléphone mobile (150) **caractérisé en ce qu'**il comporte :

- un accéléromètre (11) à trois axes destiné à mesurer des accélérations ($a_i$), pendant une durée donnée,
- des moyens de détermination, à chaque instant de mesure, d'une variation temporelle d'un vecteur d'accélération ($\Delta G_i$) due à un champ de gravitation local (Go) du téléphone par rapport aux accélération mesurés exprimés en vecteurs d'accélération par rapport à un repère cartésien (Ro) solidaire audit téléphone,
- des moyens de projection des vecteurs d'accélération ($\Delta G_i$) déterminés à une longueur de projection prédéfinie dans le prolongement de leurs orientations par rapport au repère (Ro) de sorte à obtenir un nuage de points ($T_i$),
- des moyens de détermination d'une direction d'un axe de rotation unique correspondant à l'axe de rotation du système en fonction du nuage de points, la direction de l'axe de rotation unique étant définie par les coordonnées dudit axe dans le repère cartésien (Ro).

**Patentansprüche**

**1.** Verfahren zum Bestimmen einer einzigen Drehachse (P) einer Drehbewegung (12), die von einem Anwender einem mobilen Anwendungssystem (10) auferlegt wird, wobei:

- die Beschleunigungen ($a_i$) eines dreiachsigen Beschleunigungsmessers (11) des Systems während einer gegebenen Dauer gemessen werden,
- die gemessenen Beschleunigungen anhand von Beschleunigungsvektoren in Bezug auf ein festes kartesisches Koordinatensystem (Ro) des Systems angegeben werden,
- zu jedem Messzeitpunkt eine zeitliche Veränderung eines Beschleunigungsvektors ($\Delta G_i$), die durch das lokale Gravitationsfeld (Go) des Systems bedingt ist, in Bezug auf die angegebenen Beschleunigungsvektoren bestimmt wird,
- die Orientierungen ($\theta$) der Beschleunigungsvektoren ($\Delta G_i$), die in Bezug auf das Koordinatensystem (Ro) bestimmt worden sind, bestimmt werden,

- die bestimmten Beschleunigungsvektoren ($\Delta G_i$) auf eine im Voraus definierte Projektionslänge in der Verlängerung ihrer Orientierungen projiziert werden (108), derart, dass eine Wolke ($T_i$) von Punkten erhalten wird,
- eine Richtung einer einzigen Drehachse, die der Drehachse des Systems entspricht, als Funktion der Wolke von Punkten bestimmt wird, wobei die Richtung der einzigen Drehachse durch die Koordinaten der Achse in dem kartesischen Koordinatensystem (Ro) definiert ist.

2. Verfahren nach Anspruch 1, **dadurch gekennzeichnet, dass** das Bestimmen einer Richtung der einzigen Drehachse die folgenden Schritte umfasst:

- Bestimmen eines Mediankreises ($32_i$) als Funktion der Wolke von Punkten, wobei der Mediankreis mit den Orientierungen der gemessenen Beschleunigungen einen Kegel (34) bildet, wobei der Mediankreis der Kreis ist, der den Median der Gesamtheit von Radien, die für jeden Punkt der Wolke von Punkten am wahrscheinlichsten sind, als Radius hat,
- Bestimmen einer Richtung der einzigen Drehachse, die der Umdrehungsachse des Kegels entspricht, wobei die Richtung der Drehachse durch die Koordinaten der Achse in dem festen kartesischen Koordinatensystem (Ro) des Systems definiert ist.

3. Verfahren nach Anspruch 2, **dadurch gekennzeichnet, dass** das Bestimmen des Mediankreises den folgenden Schritt umfasst:

- Bestimmen eines Radius ($r_i$) des Kreises als Funktion der Anwendung des Algorithmus kleinster Quadrate auf die Wolken von Punkten, wobei die Umdrehungsachse durch das Zentrum des Kreises verläuft,
- Bestimmen der Umdrehungsachse anhand des Radius des Mediankreises und des Zentrums des Kreises.

4. Verfahren nach Anspruch 1, **dadurch gekennzeichnet, dass**:

- eine Ebene (36), die ein Maximum von Punkten der Wolke von Punkten enthält, bestimmt wird,
- eine zu der Ebene senkrechte Gerade, die der einzigen Drehachse entspricht, bestimmt wird.

5. Verfahren nach einem der Ansprüche 1 bis 4, **dadurch gekennzeichnet, dass**:

- auf die gemessenen Beschleunigungen ein Tiefpassfilter angewendet wird (15, 103).

6. Verfahren nach Anspruch 5, **dadurch gekennzeichnet, dass** das Tiefpassfilter ein gleitender Durchschnitt ist.

7. Verfahren nach einem der Ansprüche 1 bis 6, **dadurch gekennzeichnet, dass**:

- der einzigen Drehachse ein Vertrauensattribut zugesprochen wird (19, 111), das als Funktion seiner Entwicklung im Lauf der Zeit und/oder der Dauer der Messung bestimmt wird.

8. Verfahren nach Anspruch 7, **dadurch gekennzeichnet, dass**:

- an den Anwender eine Anforderung zum Bestätigen der auferlegten Drehbewegung gesendet wird (28, 116), wenn das Vertrauensattribut niedriger als ein im Voraus definierter Vertrauensschwellenwert (S3) ist.

9. Verfahren nach einem der Ansprüche 7 bis 8, **dadurch gekennzeichnet, dass**:

- in einem Speicher (23) des Systems eine gegebene Richtung einer Drehachse (29a) einer Anwendung (29b) des Systems zugeordnet wird,
- die Anwendung, die dieser Richtung der bestimmten Drehachse zugeordnet ist, gestartet wird, wenn das Vertrauensattribut größer als der im Voraus definierte Vertrauensschwellenwert ist.

10. Mobiltelephon (150), **dadurch gekennzeichnet, dass** es Folgendes umfasst:

- einen dreiachsigen Beschleunigungsmesser (11), der dazu bestimmt ist, Beschleunigungen ($a_i$) während einer gegebenen Dauer zu messen,
- Mittel zum Bestimmen zu jedem Messzeitpunkt einer zeitlichen Veränderung eines Beschleunigungsvektors ($\Delta G_i$), die durch ein lokales Gravitationsfeld (Go) des Telephons bedingt ist, in Bezug auf die gemessenen Beschleunigungen, die als Beschleunigungsvektoren in Bezug auf ein in dem Telephon festes kartesisches Koordinatensystem (Ro) gegeben sind,

- Mittel zum Projizieren der bestimmten Beschleunigungsvektoren ($\Delta G_i$) auf eine im Voraus definierte Projektionslänge in der Verlängerung ihrer Orientierungen in Bezug auf das Koordinatensystem (Ro), derart, dass eine Wolke von Punkten ($T_i$) erhalten wird,

- Mittel zum Bestimmen einer Richtung einer einzigen Drehachse, die der Drehachse des Systems entspricht, als Funktion der Wolke von Punkten, wobei die Richtung der einzigen Drehachse durch die Koordinaten der Achse in dem kartesischen Koordinatensystem (Ro) definiert ist.

**Claims**

1. Method for determining a single axis of rotation (P) of a rotational movement (12) imposed by a user on a mobile application system (10) in which:

   - accelerations $a_i$ of an accelerometer (11) with three axes of the system are measured for a given duration,
   - the measured accelerations are expressed according to acceleration vectors relative to a Cartesian reference frame (Ro) secured to the system,
   - a temporal variation of an acceleration vector ($\Delta G_i$) due to the local gravitational field (Go) of the system relative to the expressed acceleration vectors is determined at each measurement instant,
   - the orientations ($\theta$) of the determined acceleration vectors ($\Delta G_i$) are determined relative to the reference frame (Ro),
   - the determined acceleration vectors ($\Delta G_i$) are projected (108) to a predefined projection length in the extension of their orientations so as to obtain a cloud of points ($T_i$),
   - a direction of a single axis of rotation corresponding to the axis of rotation of the system is determined as a function of the cloud of points, the direction of the single axis of rotation being defined by the coordinates of said axis in the Cartesian reference frame (Ro).

2. Method according to Claim 1, **characterized in that** the determination of a direction of the single axis of rotation comprises the following steps:

   - a median circle ($32_i$) is determined as a function of the cloud of points, the median circle forming a cone (34) with the orientations of the measured accelerations, said median circle being the circle whose radius is the median of all the radii that are most probable for each point of the cloud of points,
   - a direction of the single axis of rotation corresponding to the axis of revolution of the cone is determined, the direction of the axis of rotation is defined by the coordinates of said axis in a Cartesian reference frame (Ro) secured to the system.

3. Method according to Claim 2, **characterized in that** the determination of the median circle comprises the following step:

   - a radius ($r_i$) of the circle is determined as a function of the application of the least squares algorithm to the cloud of points, the centre of the circle passing through the axis of revolution,
   - the axis of revolution is determined from the radius of the median circle and the centre of the circle.

4. Method according to Claim 1, **characterized in that**:

   - a plane (36) comprising a maximum of points of the cloud of points is determined,
   - a straight line at right angles to the plane corresponding to the single axis of rotation is determined.

5. Method according to one of Claims 1 to 4, **characterized in that**:

   - a low-pass filter is applied (15, 103) to the measured accelerations.

6. Method according to Claim 5, **characterized in that** the low-pass filter is a sliding average.

7. Method according to one of Claims 1 to 6, **characterized in that**:

- a confidence attribute is assigned (19, 111) to the single axis of rotation determined as a function of its trend over time and/or of the measurement duration.

8. Method according to Claim 7, **characterized in that**:

- a request to confirm the imposed rotational movement is transmitted (28, 116) to the user when the confidence attribute is below a predefined confidence threshold (S3).

9. Method according to one of Claims 7 or 8, **characterized in that**:

- a given direction of an axis of rotation (29a) is associated in a memory (23) of the system with an application (29b) of the system,
- the application associated with this direction of the determined axis of rotation is triggered when the confidence attribute is above the predefined confidence threshold.

10. Mobile telephone (150) **characterized in that** it comprises:

- an accelerometer (11) with three axes intended to measure accelerations ($a_i$), for a given duration,
- means for determining, at each measurement instant, a temporal variation of an acceleration vector ($\Delta G_i$) due to a local gravitational field (Go) of the telephone relative to the measured accelerations expressed as acceleration vectors relative to a Cartesian reference frame (Ro) secured to said telephone,
- means for projecting the determined acceleration vectors ($\Delta G_i$) to a predefined projection length in the extension of their orientations relative to the reference frame (Ro) so as to obtain a cloud of points ($T_i$),
- means for determining a direction of a single axis of rotation corresponding to the axis of rotation of the system as a function of the cloud of points, the direction of the single axis of rotation being defined by the coordinates of said axis in the Cartesian reference frame (Ro).

**Fig. 1**

Fig. 2

Fig. 3

**Fig. 4**

**Fig. 6**

100 — En veille

101 — Activation manuelle

102 — Activation

103 — Filtrage

104 — Puissance

105 — Puissance > $S_1$   oui / non

107 — Puissance < $S_2$   oui / non

106 — Stockage

111 — Attribut de confiance

108 — Projection

109 — Minimisation erreurs

110 — Estimation axe

112 — Transmission

113 — Attribut > seuil / 3   oui / non

114 — Validation axe

116 — Requête confirmation

115 — Exécution application

## Fig. 5